# EUROPEAN PATENT SPECIFICATION

(11) **EP 2 413 061 B1**
(45) Date of publication and mention of the grant of the patent: **11.02.2015**
(21) Application number: 10790884.0
(22) Date of filing: 19.04.2010
(51) Int. Cl.: F24H 9/02, F24H 9/14, F24D 11/02

(54) **WATER HEATER**
WARMWASSERBEREITER
CHAUFFE-EAU

(43) Date of publication of application: 01.02.2012
(73) Proprietor: Mitsubishi Electric Corporation, Tokyo 100-8310 (JP)
(72) Inventor: YOSHII, Hideki, Tokyo 102-0073 (JP)
(74) Representative: Pfenning, Meinig & Partner GbR
(86) International application number: PCT/JP2010/056927
(87) International publication number: WO 2011/132249

(56) References cited:
- WO-A1-2009/098991
- DE-A1- 1 914 733
- DE-U1- 9 306 206
- GB-A- 2 332 737
- JP-A- 1 084 048
- JP-A- 61 195 252
- JP-A- 2006 046 817
- JP-A- 2007 071 444
- JP-A- 2007 071 444
- JP-A- 2007 085 656
- JP-A- 2007 085 656
- JP-A- 2007 278 544
- JP-A- 2007 278 544
- JP-U- 60 101 643

## Description

### Technical Field

The present invention relates to component layout, etc. of a water heater.

### Background Art

In a conventional water heater disclosed in JP 2006 46 817 A, components such as a heat exchanger, a pump, a booster heater, a three-way valve, a strainer, a flow switch, a pressure relief valve, an air vent valve, etc. are placed around a tank. Then, the tank and the components are covered with an external panel and contained in a cuboidal form.

Further, conventionally, in some water heaters, the components are placed at the lower part of the tank and an electrical component box is placed at the front surface side of the components, and the water heater is covered with an external panel, and contained in a cuboidal form.

JP 2007-071444 A discloses a water heater, having a fluid circuit in which a heater, a pump, a main heat radiator are connected by piping and fluid flows therein, and a tank which is a cylindrical tank containing the main heat radiator connected to the fluid circuit and reserving water heated by heat of the fluid which flows in the main heat radiator contained in a container case having a cuboidal form of which a front surface side is openable and closable, wherein the tank is placed close to a back surface side of the container case.

GB-A-2 332 737 shows a water heating system having storage tank means and ancillary equipment, such as heat exchangers, piping, pumps and so on. The tank means is arranged either as two side by side cylinders with their axes upright and parallel, but of which one is shorter than the other so that the ancillary equipment can be located above the shorter cylinder, or as three cylinders arranged side by side with their axes parallel, but lying at three corners of a rectangle, so that the ancillary equipment can be fitted into the space forming the fourth corner, whereby, in either case the system can be fitted neatly into a rectangular casing.

### Summary of Invention

### Technical Problem

The conventional water heater, because of bad component layout and bad volume efficiency, is large sized. Further, since the components are placed at the lower part or the side surface of the tank, the components overlap with each other when viewed from the front surface side, and the maintenance work is difficult from the front surface side.

The present invention aims to downsize the water heater and as well facilitate the maintenance work.

### Solution to Problem

According to the present invention, the problem is solved by a water heater according to claim 1.

### Advantageous Effects of Invention

In the water heater according to the present invention, the tank is placed at the back surface side of the cuboidal container case, components which require maintenance work are placed at the front surface side. Therefore, it is easy to carry out maintenance work from the front surface side. Further, the components having thickness are placed in a relatively large gap between the container case and the tank at either of the left or right corner of the front surface side. Therefore, the water heater can be downsized.

### Brief Description of Drawings

[Fig. 1] shows a water heater 30.
[Fig. 2] is a A-A cross-sectional view of Fig. 1.
[Fig. 3] is a B-B cross-sectional view of Fig. 1.
[Fig. 4] is a C-C cross-sectional view of Fig. 1.
[Fig. 5] shows a circuit configuration when a solar heating system is connected to the water heater 30.
[Fig. 6] shows status of piping of the water heater 30 when the solar heating system is connected to the water heater 30.
[Fig. 7] shows a circuit configuration when the solar heating system is not connected to the water heater 30.
[Fig. 8] shows status of piping of the water heater 30 when the solar heating system is not connected to the water heater 30.
[Fig. 9] is a perspective view showing status in which the water heater 30 is packed.
[Fig. 10] is an enlarged view of the lower part of the water heater 30.

### Description of Embodiments

### Embodiment 1.

In the present embodiment, a component layout of the water heater 30 will be explained.

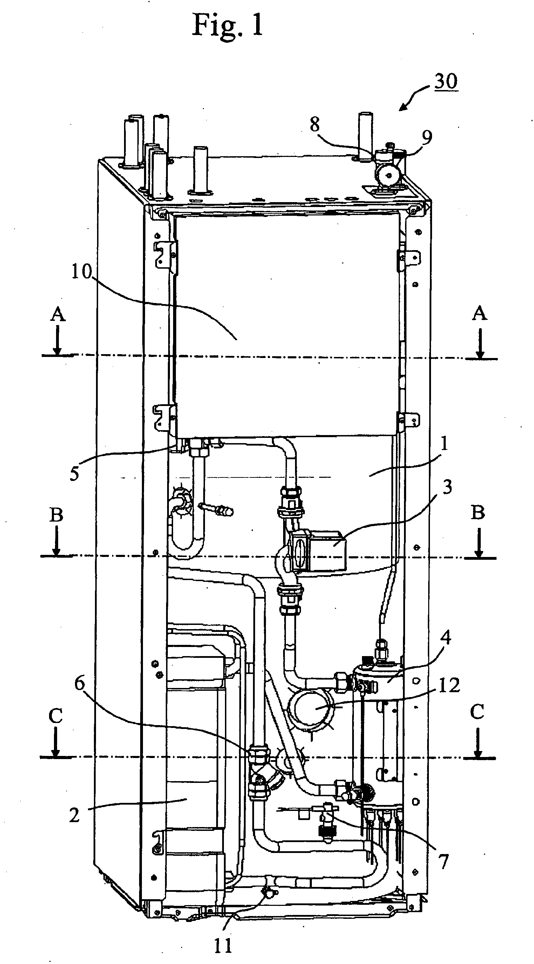

Based on Fig. 1 through Fig. 4, the water heater 30 according to the first embodiment will be explained.

Fig. 1 shows the water heater 30. In particular, Fig. 1 is a diagram of the water heater 30 from which the external panel of the front surface side is removed, and viewed from the front left side.

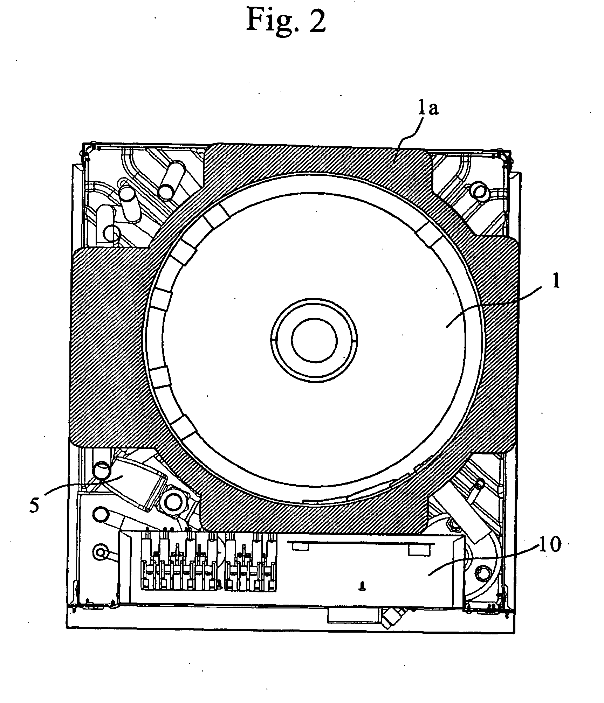

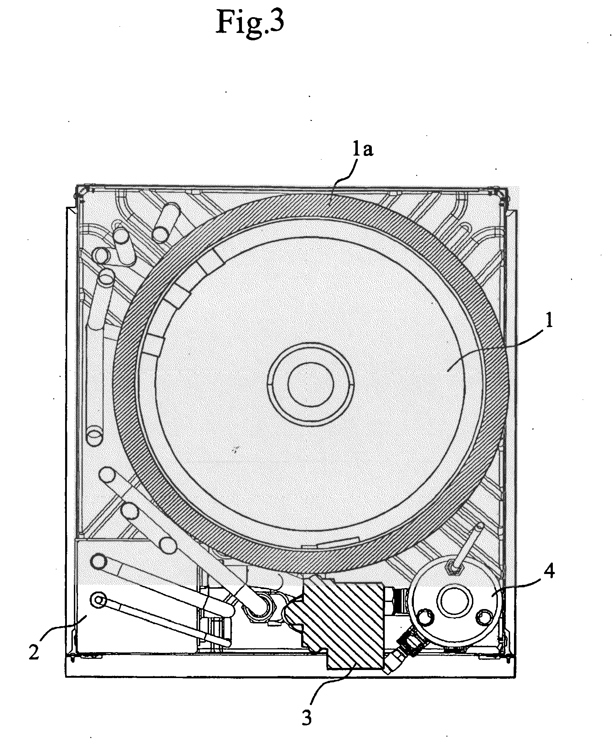

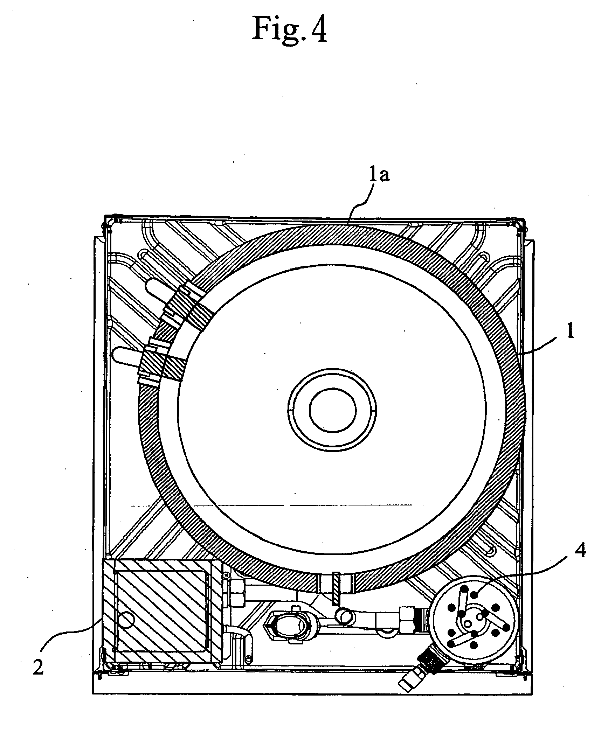

Fig. 2 is a cross-sectional view of the water heater 30 at the position of A-A of Fig. 1, and is a cross-sectional view of a horizontal plane of the water heater 30 at the height of an electrical component box 10. Fig. 3 is a cross-sectional view of the water heater 30 at the position ofB-B of Fig. 1, and is a cross-sectional view of the horizontal plane of the water heater 30 at the height of the pump 3. Fig. 4 is a cross-sectional view of the water heater 30 at the position of C-C of Fig. 1, and is a cross-sectional view of the horizontal plane of the water heater 30 at the height of the heat exchanger 2.

As for the water heater 30, a tank 1, components connected to a water circuit (an example of a fluid circuit), and an electrical component box 10 are contained in a cuboidal container case formed by the external panel. The components connected to the water circuit are a heat exchanger 2, a pump 3, a booster heater 4, a three-way valve 5 (an example of a branching device), a strainer 6, a flow switch 7, a pressure relief valve 8, an air vent valve 9, etc. The components connected to the water circuit are connected by piping. Further, a drain outlet 11 to discharge water in the water circuit is provided in the middle of the piping.

The tank 1 is a device to reserve water therein. A coil connected to the water circuit (an example of a main heat radiator) is embedded in the tank 1, heat exchange is carried out between water circulating in the water circuit (heated water) and water reserved inside of the tank 1 using the coil, and the water reserved inside is heated. Further, an immersion heater 12 is embedded in the tank 1, and the water reserved inside can be heated further by the immersion heater 12. The heated water flows to a sanitary circuit connected to a shower, etc. Further, a heat insulating material 1a is provided around the tank 1 to prevent the water reserved inside of the tank 1 from cooling (refer to Fig. 2 through Fig. 4). The heat insulating material 1a is such as felt, thinsulate, or VIP (Vacuum Insulation Panel).

The heat exchanger 2 is a device to carry out heat exchange between refrigerant heated by a heating device such as a heat pump device, etc. which is provided outside and water in the water circuit (an example of fluid). The pump 3 is a device to give pressure to the water in the water circuit and to circulate in the water circuit. The booster heater 4 is a device to heat further the water in the water circuit when the capability of the heating device such as the heat pump device, etc. is insufficient, and so on. The three-way valve 5 is a device to branch the water in the water circuit. For example, the three-way valve 5 switches a flowing direction of water in the water circuit between to the tank 1 side and to a heater of a radiator, a floor heating, etc. provided outside. The strainer 6 is a device to remove scale in the water circuit. The flow switch 7 is a device to detect whether the flow volume circulating in the water circuit is equal to or larger than a specific amount or not. The pressure relief valve 8 is a protection equipment to discharge water in the water circuit to the outside when the pressure in the water circuit is equal to or higher than a predetermined level. The air vent valve 9 is a device to discharge the air in the water circuit to the outside and prevent the pump 3 from idling.

The electrical component box 10 contains electrical components for controlling and driving the pump 3, the booster heater 4, etc.

Here, the tank 1 is formed to be a cylindrical shape which is effective for pressure resistance. Further, the tank 1 has a size capable to reserve water of around 200 liter, and is the largest among the components included in the water heater 30. Further, among the components connected to the water circuit, the heat exchanger 2, the booster heater 4, and the three-way valve 5 have thickness, and in particular, the heat exchanger 2 and the booster heater 4 are bulky compared with the other components.

Further, the tank 1 requires no maintenance. On the other hand, all components connected to the water circuit require maintenance.

Thus, the large and maintenance-free tank 1 is placed close to the back surface side of a container case. Then, the components connected to the water circuit and the electrical component box 10 are placed at the front surface side of the tank 1 so as not to overlap with each other. In particular, the heat exchanger 2, the booster heater 4, and the three-way valve 5 which are thick are placed close to either of the left and right corners of the container case where there is a relatively large gap between the tank 1 and the container case. Further, the pump 3 and the booster heater 4 are bulky compared with the other components and placed at the opposite left and right sides, respectively. Further, the electrical component box 10 that contains the electrical components which are weak in water is placed close to the upper part of the container case.

Here, although the tank 1 itself is maintenance-free, an immersion heater 12 embedded in the tank 1 needs maintenance. Then, the tank 1 is arranged so that the attachment part of the immersion heater 12 should be directed to the front surface side.

Further, the piping, etc. which form the water circuit are placed so as not to overlap with the front surface side of the attachment part of the components connected to the water circuit and the immersion heater 12. For example, the piping is placed by effectively utilizing gaps existing in the left and right edges of the back surface side of the tank 1.

As discussed above, since the components are placed in the container case, the volume efficiency is good, and the water heater 30 can be downsized. In particular, compared with the conventional water heater in which the other components are placed below the tank, it is possible to lower the height of the water heater 30. The water heater is sometimes provided indoor or belowground, and in such a case it is impossible or difficult to provide if the water heater is high. Therefore, it is effective to lower the height of the water heater.

Further, in the water heater 30, the components which require maintenance are placed at the front surface side so as not to overlap with the other components. Therefore, it is easy to carry out the maintenance work from the front surface side, and the maintenance work from the side surface side is unnecessary.

Further, the electrical component box 10 is placed close to the upper part of the water heater, which means the electrical component box 10 is placed at the height from chest to eye level of human in a standing position. Therefore, it is easy to carry out precise work such as connection of wiring, and so on. In addition, even if water leaks from the tank 1 or the piping, it is possible to prevent the electrical components contained in the electrical component box 10 from getting wet and faulty, since the electrical component box 10 is placed close to the upper part.

Further, the tank 1 and the heat exchanger 2 are heavy compared with the other components. In particular, when containing water, the tank 1 is extremely heavy. Then, the tank 1 and the heat exchanger 2 are placed at the lower part of the container case. Thus, the water heater 30 balances well and is also difficult to tilt.

### Embodiment 2.

In the present embodiment, connection of piping in the water heater 30 will be explained.

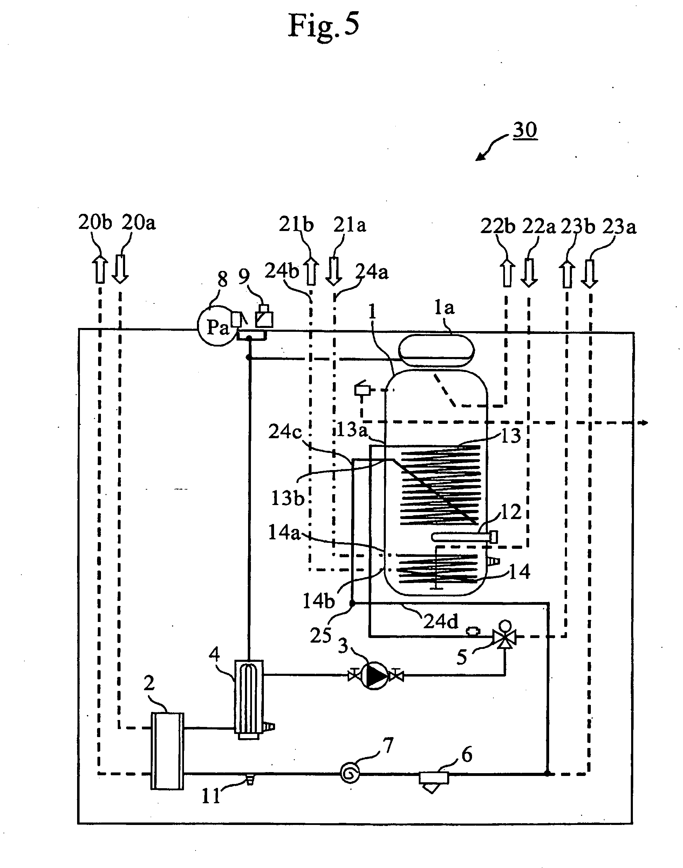

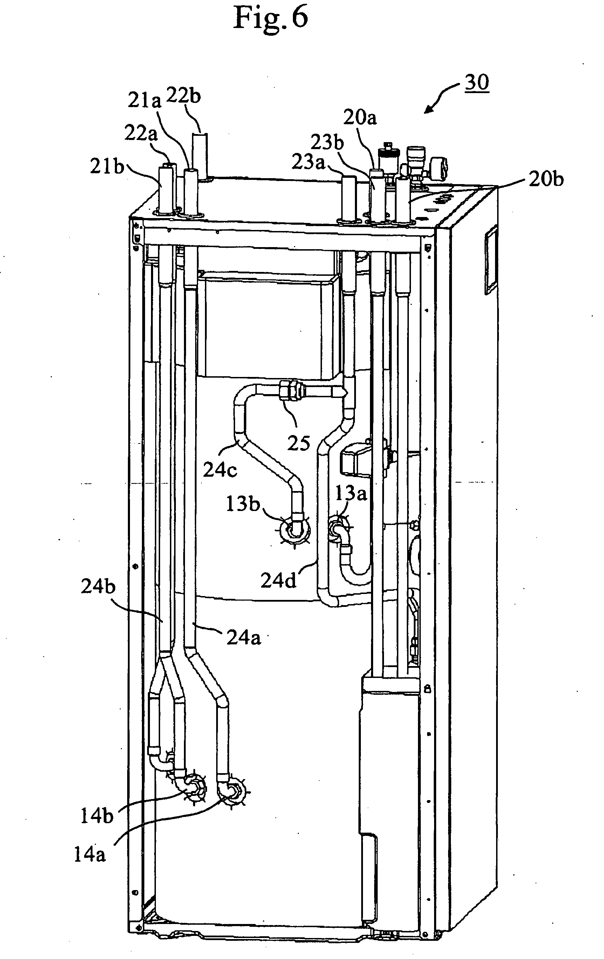

Fig. 5 shows a circuit configuration when a solar heating system is connected to the water heater 30. Fig. 6 shows status of piping of the water heater 30 when the solar heating system is connected to the water heater 30.

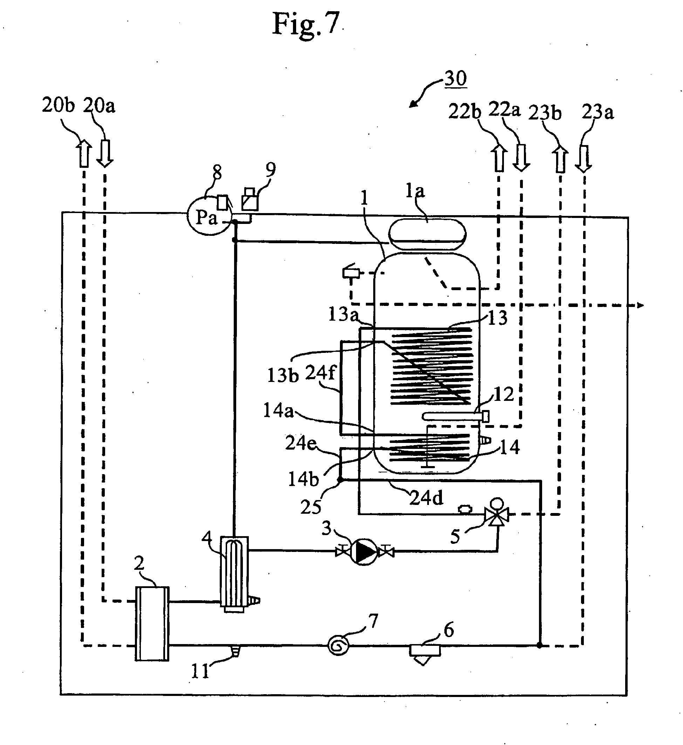

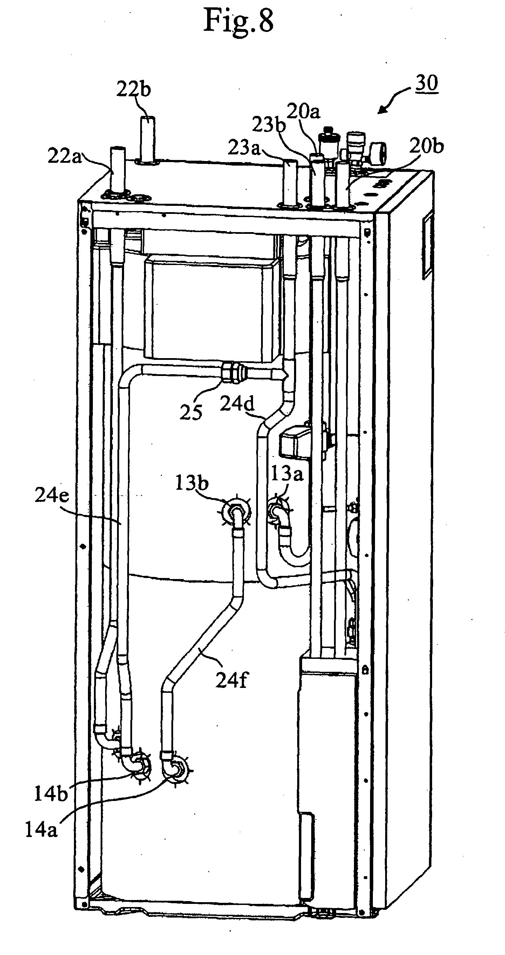

Fig. 7 shows a circuit configuration when the solar heating system is not connected to the water heater 30. Fig. 8 shows status of piping of the water heater 30 when the solar heating system is not connected to the water heater 30.

In particular, Fig. 6 and Fig. 8 are drawings of the water heater 30 when the external panel of the left side surface side is removed and viewed from the front surface left side.

Based on Fig. 5, a circuit configuration when connected to the solar heating system will be explained.

When the solar heating system is connected, the water heater 30 includes a water circuit (a circuit shown by solid lines) and a solar circuit (a circuit shown by alternate long and short dash lines).

The water circuit connects a heat exchanger 2, a booster heater 4, a pump 3, a three-way valve 5, a main coil 13 (an example of a main heat radiator), a strainer 6, a flow switch 7, a drain outlet 11 serially by piping. Further, diverging from the booster heater 4, the water circuit connects a pressure relief valve 8 and an air vent valve 9.

The solar circuit connects a solar heating system and a solar coil 14 (an example of an auxiliary heat radiator) by piping. Concretely, the solar circuit connects a solar circuit inlet 21a to which water flows in from the solar heating system and a solar coil inlet 14a by piping (a piping 24a), and as well connects a solar circuit outlet 21b from which water flows out to the solar heating system and a solar coil outlet 14b by piping (a piping 24b).

Based on Fig. 7, a circuit configuration when unconnected to the solar heating system will be explained.

When the solar heating system is not connected, the water heater 30 does not include the solar circuit but includes the water circuit (a circuit shown by solid lines).

The water circuit connects the heat exchanger 2, the booster heater 4, the pump 3, the three-way valve 5, the main coil 13, the solar coil 14, the strainer 6, the flow switch 7, and the drain outlet 11 serially by piping. Namely, in the water circuit, the piping is connected to a main coil inlet 13a so as to allow the water flown out from the heat exchanger 2 or the booster heater 4 to flow in the main coil 13, a main coil outlet 13b which is at the outlet side of the main coil 13 and the solar coil inlet 14a are connected by piping (a piping 24f), and the piping (a piping 24e) is connected to the solar coil outlet 14b so as to allow the water flown out from the solar coil 14 to flow in the heat exchanger 2 or the booster heater 4. That is, in the water circuit, the main coil 13 and the solar coil 14 are connected in series. Further, diverging from the booster heater 4, the water circuit connects the pressure relief valve 8 and the air vent valve 9.

Here, either when the solar heating system is connected or unconnected, the heat exchanger 2 is connected to a H/P refrigerant circuit inlet 20a and a H/P refrigerant circuit outlet 20b which are connecting ports to the H/P device (the heat pump device) provided outside by the piping. Further, the three-way valve 5 is connected to a heating circuit inlet 23a and a heating circuit outlet 23b which are connecting ports to the heat radiator provided outside by the piping. Further, the tank 1 is connected to a sanitary circuit inlet 22a and a sanitary circuit outlet 22b which are connecting port to sanitary facilities such as shower, etc. provided outside by the piping.

Based on Fig. 6 and Fig. 8, a method to switch between connected and unconnected to the solar heating system will be explained.

Here, in this section, switching from the status in which the solar heating system is connected to the status in which the solar heating system is not connected will be explained.

First, the piping 24a which connects the solar circuit inlet 21a and the solar coil inlet 14a shown in Fig. 6 is removed. Similarly, the piping 24b which connects the solar circuit outlet 21b and the solar coil outlet 14b is removed. Further, a piping 24c which connects the main coil outlet 13b and the connecting point 25 is removed. Here, at the connecting point 25, a piping 24d which leads to the inlet side of the heat exchanger 2 or the booster heater 4 is connected (refer to Figs. 5 and 7).

Then, the solar coil outlet 14b and the connecting point 25 shown in Fig. 8 are connected by the piping 24e, the main coil outlet 13b and the solar coil inlet 14a are connected by the piping 24f. By the above operation, the piping connection status has become the one when the solar heating system is not connected.

Here, since the piping is fastened with a screw to the component of the tank 1, etc., it is easy to attach or remove using a spanner, an adjustable wrench, etc.

Here, the piping 24a and the piping 24c can be piping formed by easily bendable material such as gum, etc.

In this case, first, the piping 24a which connects the solar circuit inlet 21a and the solar coil inlet 14a is removed. Further, with maintaining the connection to the solar coil outlet 14b, the piping 24b is removed from the solar circuit outlet 21b. Similarly, with maintaining the connection to the main coil outlet 13b, the piping 24c is removed from the connecting point 25.

Then, the side of the piping 24b which has been connected to the solar circuit outlet 21b is now connected to the connecting point 25. Further, the side of the piping 24c which has been connected to the connecting point 25 is now connected to the solar coil inlet 14a. By the above operation, the piping connection status has become the one when the solar heating system is not connected.

Namely, the piping 24a and the piping 24c are made the piping formed by easily bendable material such as gum, etc., and thereby the operation is simplified and further two pipings are commonly used for cases of connected and unconnected to the solar heating system.

Here, as shown in Fig. 6 and Fig. 8, connecting ports to the main coil inlet 13a, the main coil outlet 13b, the solar coil inlet 14a, and the solar coil outlet 14b provided at the tank 1 are placed visibly from the left side surface side of the container case. Thus, only by removing the external panel of the left side surface side of the container case, it is possible to view each connecting port, and switch between connected and unconnected to the solar heating system.

Here, in the above explanation, the solar heating system means a system to heat water using the heat energy by sunlight.

### Embodiment 3.

In the present embodiment, a packing method of the water heater 30 will be explained

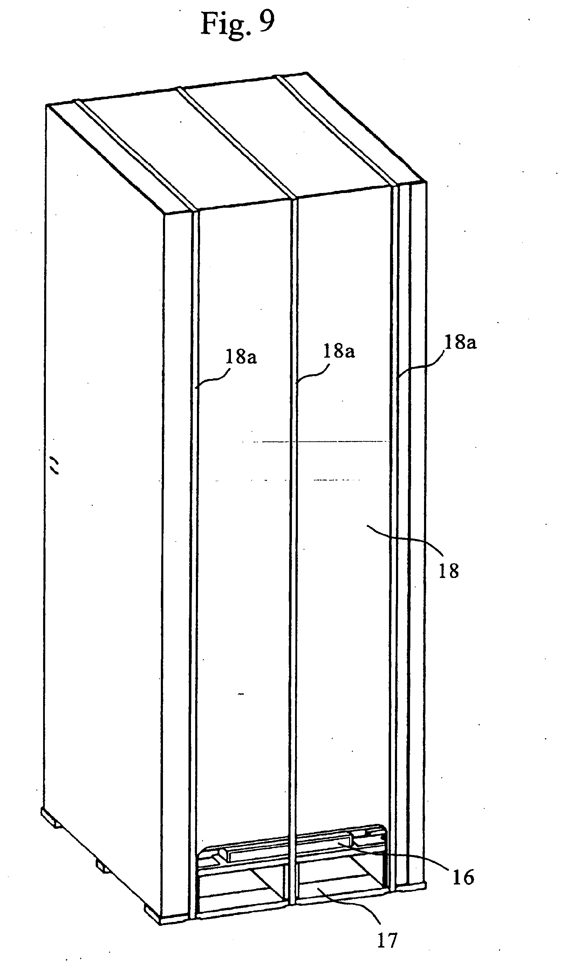

Fig. 9 is a perspective view showing status in which the water heater 30 is packed.

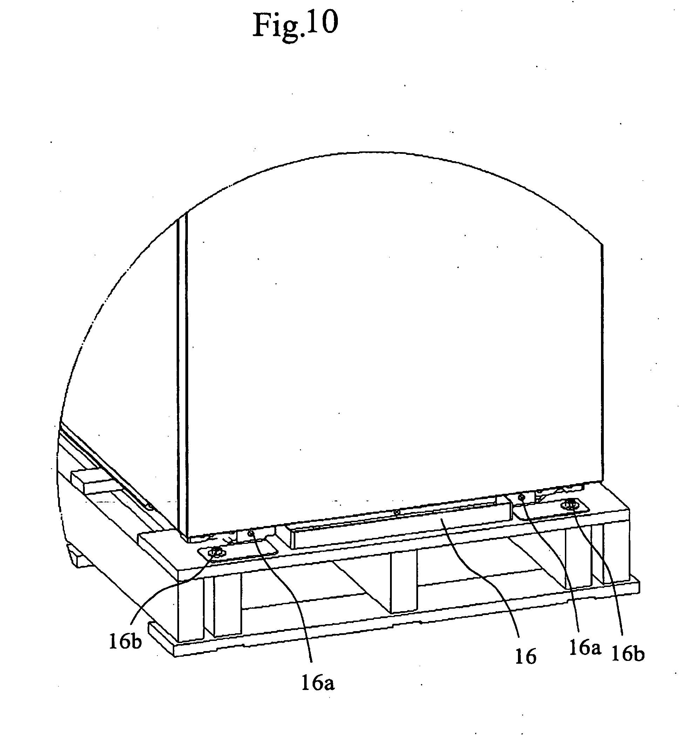

Fig. 10 is an enlarged view of the lower part of the water heater 30. Here, Fig. 10 shows the status where a package box 18 is not attached.

When the water heater 30 is packed, the water heater 30 is first mounted on a wood baseboard 17. Next, to the base part of the water heater 30, a transportation handle 16 (an example of an attachment member) is fixed with a handle-to-heater-tank fixing screw 16a. Next, the transportation handle 16 is fixed to the base part of the water heater 30, and fixed to the wood baseboard 17 with a handle-to-baseboard fixing screw 16b. Namely, using the transportation handle 16, the water heater 30 and the wood baseboard 17 are fixed. Then, the package box 18 is put over the water heater 30, and the wood baseboard 17 and the package box 18 are fixed with a band 18a. By the above operation, the water heater 30 becomes a packed status as shown in Fig. 9. Here, the transportation handle 16 is provided with a carrying handle to facilitate carrying by hand.

The water heater 30 is transported with the above packed status. At this time, since the transportation handle 16 is provided at the lower part of the water heater 30, the operation of carrying the water heater 30 by hand becomes easy. Further, the water heater 30 and the wood baseboard 17 are fixed by the transportation handle 16, and thus the packed water heater is stable. In addition, the transportation handle 16 also works as a fixing attachment of the water heater 30 and the wood baseboard 17, and thus providing the transportation handle 16 does not increase the number of components.

### Reference Signs List

1: a tank; 2: a heat exchanger; 3: a pump; 4: a booster heater; 5: a three-way valve; 6: a strainer; 7: a flow switch; 8: a pressure relief valve; 9: an air vent valve; 10: an electrical component box; 11: a drain outlet; 12: an immersion heater; 13: a main coil; 13a: a main coil inlet; 13b: a main coil outlet; 14: a solar coil; 14a: a solar coil inlet; 14b: a solar coil outlet; 15: a main water circuit; 16: a transportation handle; 16a: a handle-to-heater-tank fixing screw; 16b: a handle-to-baseboard fixing screw; 17: a wood baseboard; 18: a package box; 20a: a H/P refrigerant circuit inlet; 20b: a H/P refrigerant circuit outlet; 21a: a solar circuit inlet; 21b: a solar circuit outlet; 22a: a sanitary circuit inlet; 22b: a sanitary circuit outlet; 23a: a heating circuit inlet; 23b: a heating circuit outlet; 24: a connecting point; and 30: a water heater.

## Claims

1. A water heater (30) having a fluid circuit (15) in which a heater (4), a pump (3), a main heat radiator (13), a strainer (6) are connected by piping and fluid flows therein and a cylindrical tank (1),
whereby the tank (1) contains the main heat radiator (13)
connected to the fluid circuit (15) and reserves water heated by heat of the fluid which flows in the main heat radiator (13) contained in a container case having a cuboidal form of which a front surface side is openable and closable, wherein
the tank (1) is placed close to a back surface side of the container case; the heater is a booster heater (4) for heating further the fluid and is placed at a corner of the front surface side of the container case in a gap between the container case and the tank (1);
the strainer (6) is placed at the front surface side of the container case in the gap between the container case and the tank (1);
the pump (3) is placed at the front surface side of the container case in the gap between the container case and the tank (1),
such that the components which require maintenance are placed at the front surface side so as not to overlap with each other, and the piping is placed in the gaps between the container case and the tank (1) existing in the left and right edges of the back surface side of the tank (1) so as not to overlap with the front surface side of the attachment part of the components connected to the fluid circuit (15).

2. The water heater of claim 1, wherein the pump (3) is placed at a corner of the front surface side of the container case opposite to the corner where the booster heater is placed.

3. The water heater of claim 1,
wherein to middle of the fluid circuit, a heat exchanger (2) which carries out heat exchange between the fluid flowing in the fluid circuit (15) and refrigerant heated by a heating device provided outside of the container case is connected, and
wherein the heat exchanger (2) is placed at a corner of the front surface side of the container case in the gap between the container case and the tank (1).

4. The water heater of claim 3,
wherein the heater (4) and the heat exchanger (2) are placed at opposite sides of the left and right corners of the container case.

5. The water heater of one of claims 1 through 4,
wherein to middle of the fluid circuit (15), a branching device (5) which branches the fluid circuit (15) and switches between flowing of the fluid that flows in the fluid circuit (15) to a side of the main heat radiator (13) and flowing to a side of a heater provided outside of the container case is connected, and
wherein the branching device (5) is placed at a corner of the front surface side of the container case in the gap between the container case and the tank (1).

6. The water heater of one of claims 1 through 5 further comprising:
an electrical component box (10) containing an electrical component which controls the heater (4) and the pump (3) and placed close to an upper part of the front surface side of the container case in the gap between the container case and the tank (1).

7. The water heater of claim 3,
wherein the tank (1) and the heat exchanger (2) are placed close to a lower part of the container case.

8. The water heater of one of claims 1 through 7,
wherein the tank (1) includes an auxiliary heat radiator (14) which carries out heat exchange between the water reserved in the tank (1) and the fluid which flows inside, and a connecting port of the main heat radiator (13) and a connecting port of the auxiliary heat radiator (14) are placed at a same surface side of the container case.

9. The water heater of claim 8,
wherein to the water heater (30), connection is done by piping so that a solar heating system which heats fluid using heat energy by sunlight and the auxiliary heat radiator (14) are connected by piping, or connection is done by the fluid circuit (15) so that fluid from the heater flows into the main heat radiator (13), fluid from the main heat radiator (13) flows into the auxiliary heat radiator (14), and fluid from the auxiliary heat radiator (14) flows into the heater.

10. The water heater of claim 9,
wherein the auxiliary heat radiator (14) is placed below the main heat radiator (13).

## Patentansprüche

1. Warmwasserbereiter (30) mit einem Fluidkreis (15), in welchem eine Heizvorrichtung (4), eine Pumpe (3), ein Hauptheizradiator (13),
ein Filter (6) durch Leitungen verbunden sind und Fluid darin strömt, und einem zylindrischen Tank (1),
wobei der Tank (1) den Hauptheizradiator (13) enthält, der mit dem Fluidkreis (15) verbunden ist, und Wasser speichert, das durch Wärme des Fluids erwärmt wurde, das in dem Hauptheizradiator (13) strömt, der in einem quaderförmigen Behältergehäuse enthalten ist, dessen Vorderflächenseite zu öffnen und zu schließen ist, wobei
der Tank (1) nahe einer Rückflächenseite des Behältergehäuses angeordnet ist;
die Heizvorrichtung eine Booster-Heizvorrichtung (4) zum weiteren Erwärmen des Fluids und in einer Ecke der Vorderflächenseite des Behältergehäuses in einem Spalt zwischen dem Behältergehäuse und dem Tank (1) angeordnet ist;
der Filter (6) auf der Vorderflächenseite des Behältergehäuses in dem Spalt zwischen dem Behältergehäuse und dem Tank (1) angeordnet ist;
die Pumpe (3) auf der Vorderflächenseite des Behältergehäuses in dem Spalt zwischen dem Behältergehäuse und dem Tank (1) angeordnet ist,
derart, dass die Komponenten, die eine Wartung benötigen, auf der Vorderflächenseite so angeordnet sind, dass sie einander nicht überlappen, und die Leitungen in den Spalten zwischen dem Behältergehäuse und dem Tank (1), die sich an den linken und rechten Rändern der Rückflächenseite des Tanks (1) befinden, so angeordnet sind, dass sie nicht mit der Vorderflächenseite des Anbringungsteils für die mit dem Fluidkreis (15) verbundenen Komponenten überlappen.

2. Warmwasserbereiter nach Anspruch 1, bei dem die Pumpe (3) in einer Ecke der Vorderflächenseite des Behältergehäuses gegenüber der Ecke, in der sich die Booster-Heizvorrichtung befindet, angeordnet ist.

3. Warmwasserbereiter nach Anspruch 1,
bei dem ein Wärmetauscher (2), der einen Wärmeaustausch zwischen dem in dem Fluidkreis (15) strömenden Fluid und einem Kältemittel, das von einer außerhalb des Behältergehäuses vorgesehenen Heizvorrichtung erwärmt wurde, durchführt, mit der Mitte des Fluidkreises verbunden ist und
bei dem der Wärmetauscher (2) in einer Ecke der Vorderflächenseite des Behältergehäuses in dem Spalt zwischen dem Behältergehäuse und dem Tank (1) angeordnet ist.

4. Warmwasserbereiter nach Anspruch 3,
bei dem die Heizvorrichtung (4) und der Wärmetauscher (2) auf gegenüberliegenden Seiten der linken und der rechten Ecke des Behältergehäuses angeordnet sind.

5. Warmwasserbereiter nach einem der Ansprüche 1 bis 4,
bei dem eine Verzweigungsvorrichtung (5), die den Fluidkreis (15) verzweigt und zwischen dem Strömen des Fluids, das in dem Fluidkreis (15) strömt, zu einer Seite des Hauptheizradiators (13) und dem Strömen zu einer Seite einer Heizvorrichtung, die außerhalb des Behältergehäuses vorgesehen ist, umschaltet, mit der Mitte des Fluidkreises (15) verbunden ist und
wobei die Verzweigungsvorrichtung (5) in einer Ecke der Vorderflächenseite des Behältergehäuses in dem Spalt zwischen dem Behältergehäuse und dem Tank (1) angeordnet ist.

6. Warmwasserbereiter nach einem der Ansprüche 1 bis 5, weiterhin aufweisend:
einen Kasten (10) für elektrische Komponenten, enthaltend eine elektrische Komponente, die die Heizvorrichtung (4) und die Pumpe (3) steuert und nahe an einem oberen Teil der Vorderflächenseite des Behältergehäuses in dem Spalt zwischen dem Behältergehäuse und dem Tank (1) angeordnet ist.

7. Warmwasserbereiter nach Anspruch 3,
bei dem der Tank (1) und der Wärmetauscher (2) nahe einem unteren Teil des Behältergehäuses angeordnet sind.

8. Warmwasserbereiter nach einem der Ansprüche 1 bis 7,
bei dem der Tank (1) einen Hilfsheizradiator (14) enthält, der einen Wärmeaustausch zwischen dem in dem Tank (1) gespeicherten Wasser und dem im Innern strömenden Fluid durchführt, und eine Verbindungsöffnung des Hauptheizradiators (13) und eine Verbindungsöffnung des Hilfsheizradiators (14) auf derselben Oberflächenseite des Behältergehäuses angeordnet sind.

9. Warmwasserbereiter nach Anspruch 8,
bei dem eine Verbindung zu der Wasserheizvorrichtung (30) durch Leitungen so erfolgt, dass ein Solarheizsystem, das Fluid unter Verwendung von Heizenergie durch Sonnenlicht erwärmt, und der Hilfsheizradiator (14) durch Leitungen verbunden sind oder eine Verbindung durch den Fluidkreis (15) so erfolgt, dass Fluid von der Heizvorrichtung in den Hauptheizradiator (13) strömt, Fluid von dem Hauptheizradiator (13) in den Hilfsheizradiator (14) strömt und Fluid von dem Hilfsheizradiator (14) in die Heizvorrichtung strömt.

10. Warmwasserbereiter nach Anspruch 9,
bei dem der Hilfsheizradiator (14) unterhalb des Hauptheizradiators (13) angeordnet ist.

## Revendications

1. Chauffe-eau (30) présentant un circuit de fluide (15) dans lequel un dispositif de chauffage (4), une pompe (3), un dissipateur de chaleur principal (13), une crépine (6) sont reliés par une tuyauterie et le fluide circule à l'intérieur, et un réservoir cylindrique (1) ;
grâce à quoi le réservoir (1) contient le dissipateur de chaleur principal (13) relié au circuit de fluide (15) et contient l'eau chauffée par la chaleur du fluide qui circule dans le dissipateur de chaleur principal (13) contenu dans une enveloppe de contenant qui présente une forme de cuboïde dont un côté surface avant peut être ouvert et fermé ; dans lequel
le réservoir (1) est placé à proximité d'un côté surface arrière de l'enveloppe de contenant ;
le dispositif de chauffage est un dispositif de chauffage surchauffeur (4) destiné à chauffer davantage le fluide, et se situe au niveau d'un coin du côté surface avant de l'enveloppe de contenant dans un espace qui se situe entre l'enveloppe de contenant et le réservoir (1) ;
la crépine (6) est placée au niveau du côté surface avant de l'enveloppe de contenant dans l'espace qui se situe entre l'enveloppe de contenant et le réservoir (1) ;
la pompe (3) est placée au niveau du côté surface avant de l'enveloppe de contenant dans l'espace qui se situe entre l'enveloppe de contenant et le réservoir (1) ;
de telle sorte que les composants qui nécessitent un entretien soient placés au niveau du côté surface avant de façon à ne pas se chevaucher les uns avec les autres, et la tuyauterie est placée dans les espaces qui se situent entre l'enveloppe de contenant et le réservoir (1) qui existent dans les bords gauche et droit du côté surface arrière du réservoir (1) de façon à ne pas se chevaucher avec le côté surface avant de la partie fixation des composants reliés au circuit de fluide (15).

2. Chauffe-eau selon la revendication 1,
dans lequel la pompe (3) est placée au niveau d'un coin du côté surface avant de l'enveloppe de contenant, opposé au coin où est placé le dispositif de chauffage surchauffeur.

3. Chauffe-eau selon la revendication 1,
dans lequel est relié, au milieu du circuit de fluide, un échangeur de chaleur (2) qui exécute un échange de chaleur entre le fluide qui circule dans le circuit de fluide (15) et un réfrigérant chauffé par un dispositif de chauffage disposé à l'extérieur de l'enveloppe de contenant ; et
dans lequel l'échangeur de chaleur (2) est placé au niveau d'un coin du côté surface avant de l'enveloppe de contenant dans l'espace qui se situe entre l'enveloppe de contenant et le réservoir (1).

4. Chauffe-eau selon la revendication 3,
dans lequel le dispositif de chauffage (4) et l'échangeur de chaleur (2) sont placés au niveau des côtés opposés des coins gauches et droits de l'enveloppe de contenant.

5. Chauffe-eau selon l'une quelconque des revendications 1 à 4,
dans lequel est relié, au milieu du circuit de fluide (15), un dispositif d'embranchement (5) qui embranche le circuit de fluide (15) et commute entre la circulation du fluide qui circule dans le circuit de fluide (15) vers un côté du dissipateur de chaleur principal (13) et la circulation vers un côté d'un dispositif de chauffage disposé à l'extérieur de l'enveloppe de contenant ; et
dans lequel le dispositif d'embranchement (5) est placé au niveau d'un coin du côté surface avant de l'enveloppe de contenant dans l'espace qui se situe entre l'enveloppe de contenant et le réservoir (1).

6. Chauffe-eau selon l'une quelconque des revendications 1 à 5, comprenant en outre :
un boîtier de composant électrique (10) qui contient un composant électrique qui commande le dispositif de chauffage (4) et la pompe (3) et qui est placé à proximité d'une partie supérieure du côté surface avant de l'enveloppe de contenant dans l'espace qui se situe entre l'enveloppe de contenant et le réservoir (1).

7. Chauffe-eau selon la revendication 3,
dans lequel le réservoir (1) et l'échangeur de chaleur (2) sont placés à proximité d'une partie inférieure de l'enveloppe de contenant.

8. Chauffe-eau selon l'une quelconque des revendications 1 à 7,
dans lequel le réservoir (1) comprend un dissipateur de chaleur auxiliaire (14) qui exécute un échange de chaleur entre l'eau contenue dans le réservoir (1) et le fluide qui circule à l'intérieur et un orifice de connexion du dissipateur de chaleur principal (13) et un orifice de connexion du dissipateur de chaleur auxiliaire (14) sont placés du même côté surface de l'enveloppe de contenant.

9. Chauffe-eau selon la revendication 8,
dans lequel une connexion vers le chauffe-eau (30) est réalisée au moyen d'une tuyauterie de telle sorte qu'un système de chauffage solaire qui chauffe le fluide en utilisant l'énergie thermique fournie par la lumière du soleil et le dissipateur de chaleur auxiliaire (14) soient reliés par la tuyauterie, ou une connexion est réalisée au moyen du circuit de fluide (15) de telle sorte que le fluide en provenance du dispositif de chauffage circule dans le dissipateur de chaleur principal (13), que le fluide en provenance du dissipateur de chaleur principal (13) circule dans le dissipateur de chaleur auxiliaire (14) et que le fluide en provenance du dissipateur de chaleur auxiliaire (14) circule dans le dispositif de chauffage.

10. Chauffe-eau selon la revendication 9,
dans lequel le dissipateur de chaleur auxiliaire (14) est placé en dessous du dissipateur de chaleur principal (13).
